# EUROPEAN PATENT APPLICATION

(11) **EP 4 674 267 A1**
(43) Date of publication of application: **07.01.2026**
(21) Application number: 24763717.6
(22) Date of filing: 20.02.2024
(51) Int. Cl.: A01N 43/16, A01N 59/00, A01N 59/08, A01P 21/00

(54) **POLLEN ACTIVATION SOLUTION**

(30) Priority: 01.03.2023 JP 2023030776
(71) Applicant: Japan Advanced Institute of Science and Technology, Ishikawa 923-1292 (JP)
(72) Inventor: MIYAKO, Eijiro, Nomi-shi, Ishikawa 923-1292 (JP)
(74) Representative: v. Bezold & Partner Patentanwälte - PartG mbB
(86) International application number: PCT/JP2024/006041
(87) International publication number: WO 2024/181236

(57) **Abstract**

A pollen activation solution (1) includes: an aqueous solution containing a substance that activates pollen germination and pollen tube elongation; and a powdered carbon constituent added to the aqueous solution. The carbon constituent has not been subjected to an activation treatment. Examples of the substance that activates pollen germination and pollen tube elongation, which can be used herein, include sucrose, boric acid, magnesium sulfate heptahydrate, calcium chloride, potassium chloride, and gelatin. An example of the powdered carbon constituent that can be used herein is bamboo leaf charcoal powder made by pulverizing bamboo leaf charcoal.

## Description

### Technical Field

The present disclosure relates to a pollen activation solution.

### Background Art

When pollen is supplied to the pistils of plants in fruit cultivation, horticulture, and the like by humans or machines, a method is known that involves dispersing pollen in a pollen activation solution that activates the pollen and then applying the solution.

As an example of such a pollen activation solution, Patent Literature 1 discloses an aqueous pollination agent for increasing the germination rate of pollen, which contains sucrose and sorbitol as essential ingredients, and further contains proline. Patent Literature 1 also discloses that the addition of polyoxyalkylene alkyl ether to the above aqueous pollination agent can ensure uniform dispersion of pollen within the aqueous pollination agent, that the addition of peach resin can ensure attachment to the stigma of flowers, and that the addition of food coloring can ensure visibility of attachment to the floral organs.

### Citation List

### Patent Literature

Patent Literature 1: Unexamined Japanese Patent Application Publication No. 2010-275252

### Summary of Invention

### Technical Problem

The aqueous pollination agent disclosed in Patent Literature 1 is problematic in that when pollen is dispersed, the osmotic pressure of water places a large load on the pollen grains, causing the pollen grains to expand and become damaged or burst, resulting in the pollen becoming inactivated in a short period of time, specifically less than 30 minutes.

The present disclosure was made in consideration of the above circumstances, and an objective thereof is to extend the period from pollen dispersion to pollen inactivation.

### Solution to Problem

In order to achieve the above objective, the pollen activation solution according to the present disclosure is a pollen activation solution with pollen in a state of being dispersed, which is supplied to a pistil of a plant, and includes an aqueous solution containing a substance that activates pollen germination and pollen tube elongation, and a powdered carbon constituent that is a substance including carbon added to the aqueous solution, wherein the carbon constituent has not been subjected to an activation treatment.

### Advantageous Effects of Invention

According to the present disclosure, a powdered carbon constituent is added to an aqueous solution containing a substance that activates pollen germination and pollen tube elongation. As a result, the pollen activation solution according to the present disclosure can extend the period from pollen dispersion to pollen inactivation longer than a pollen activation solution containing no powdered carbon constituent added thereto.

### Brief Description of Drawings

FIG. 1 is a diagram illustrating a state in which a pollen activation solution according to an embodiment of the present disclosure is supplied to the pistil of a plant;
FIG. 2A illustrates pollen germination rates in Experimental Examples 1 to 7 and Comparative Examples 1 and 2;
FIG. 2B illustrates pollen tube lengths in Experimental Examples 1 to 7 and Comparative Examples 1 and 2;
FIG. 3 illustrates pollen germination rates in Experimental Example 11 and Comparative Examples 11 to 15;
FIG. 4A illustrates pollen germination rates in Experimental Example 21 and Comparative Examples 21 and 26;
FIG. 4B illustrates pollen germination rates in Experimental Example 22 and Comparative Examples 22 and 27;
FIG. 4C illustrates pollen germination rates in Experimental Example 23 and Comparative Examples 23 and 28;
FIG. 4D illustrates pollen germination rates in Experimental Example 24 and Comparative Examples 24 and 29;
FIG. 4E illustrates pollen germination rates in Experimental Example 25 and Comparative Examples 25 and 30;
FIG. 5 illustrates pollen germination rates in Experimental Example 31 and Comparative Example 31;
FIG. 6 illustrates pollen germination rates in Experimental Examples 41 to 45 and Comparative Example 41;
FIG. 7 illustrates pollen germination rates in Experimental Example 51 and Comparative Example 51;
FIG. 8 illustrates pollen germination rates in Experimental Example 61 and Comparative Examples 61 and 62;
FIG. 9A illustrates pollen germination rates in Experimental Examples 71 and 72 and Comparative Examples 71 and 72;
FIG. 9B illustrates pollen germination rates in Experimental Examples 81 and 82 and Comparative Example 81; and
FIG. 9C illustrates pollen germination rates in Experimental Examples 91 and 92 and Comparative Example 91.

### Description of Embodiments

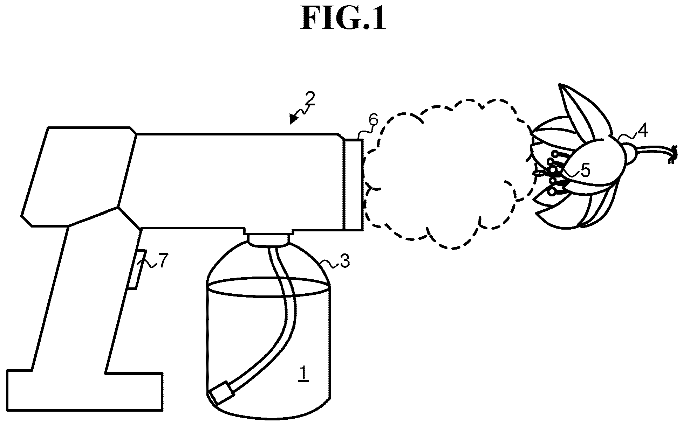

The embodiments of the present disclosure are described in detail with reference to the drawings. As illustrated in FIG. 1, the pollen activation solution 1 according to the present embodiment is stored in a storage container 3 of a sprayer 2 after pollen dispersion, and is then supplied to a pistil 5 of a plant 4 by the sprayer 2. Specifically, a user (not illustrated) turns on an input switch 7 of the sprayer 2 while pointing an output port (nozzle) 6 of the sprayer 2 toward the pistil 5, and sprays the pollen activation solution 1 stored in the storage container 3. As a result, the pollen activation solution 1 is supplied to the pistil 5 through attachment thereof in a mist form to the pistil 5 of the plant 4.

The pollen activation solution 1 comprises an aqueous solution containing a substance that activates pollen germination and pollen tube elongation, and powdered charcoal added to the aqueous solution. Examples of substances that can be used to activate pollen germination and pollen tube elongation include sucrose, boric acid (H₃BO₃), magnesium sulfate heptahydrate (MgSO₄·7H₂O), calcium chloride (CaCl₂), potassium chloride (KCl), and gelatin.

In the present embodiment, the aqueous solution contained in the pollen activation solution 1 contains 10% sucrose, 5 ppm (=0.0005%) boric acid, 0.1 mM (mmol/l) magnesium sulfate heptahydrate, 1.0 mM calcium chloride, 1.0 mM potassium chloride, and 0.8% gelatin. The aqueous solution contained in the pollen activation solution 1 is generated by a method that involves first dissolving 10% sucrose, 5 ppm boric acid, 0.1 mM magnesium sulfate heptahydrate, 1.0 mM calcium chloride, and 1.0 mM potassium chloride in distilled water. Next, the distilled water containing each substance dissolved therein is adjusted to have a pH of 7.0 using a 0.1 M aqueous sodium hydroxide solution. The adjusted distilled water is then heated to about 80°C using a hot water bath or the like, and then 0.8% gelatin is dissolved in the heated distilled water to generate the aqueous solution contained in the pollen activation solution 1.

The powdered charcoal that can be added to the above aqueous solution is, for example, bamboo leaf charcoal powder made by pulverizing bamboo leaf charcoal. The powdered charcoal according to the present embodiment is bamboo leaf charcoal powder pulverized to an average particle size of 3 µm, and 100 mg of the bamboo leaf charcoal powder is added to 10 mL of an aqueous solution.

As described above, according to the pollen activation solution 1 according to the present embodiment, powdered charcoal as an example of a powdered carbon constituent has been added to an aqueous solution containing a substance that activates pollen germination and pollen tube elongation.

By doing this, the pollen activation solution 1 according to the present embodiment can extend the period from pollen dispersion to pollen inactivation longer than a pollen activation solution containing no powdered charcoal added thereto.

Here, the inventor actually purchased a commercially available pollen activation solution and dispersed pollen without adding bamboo leaf charcoal powder, and confirmed that the pollen was inactivated within 30 minutes. In contrast, the inventor added bamboo leaf charcoal powder to the purchased pollen activation solution and dispersed pollen, and could confirm that the pollen was not inactivated for more than 30 minutes.

As a result, even if the pollen activation solution according to the present disclosure is not the pollen activation solution 1 according to the present embodiment, adding powdered charcoal can extend the period from pollen dispersion to pollen inactivation.

The reason why the addition of powdered charcoal can extend the period for pollen dispersed in the pollen activation solution to be inactivated has not yet been specified. One possible reason for this is that, for example, when powdered charcoal is attached to the pollen dispersed in the aqueous solution, the contact area of pollen with charcoal attached thereto with water is smaller than that of pollen without charcoal attached thereto, making the shell less likely to be damaged by the osmotic pressure of water, and water is less likely to penetrate into the pollen shell, which causes the contents of the pollen to expand due to the osmotic pressure of water before germination, making the pollen contents less likely to be damaged or burst.

### [Experimental Examples regarding pollen inactivation]

Here, the inventor conducted experiments to confirm whether or not the use of the pollen activation solution according to the present disclosure extends the period from pollen dispersion to pollen inactivation.

### [Experimental Example 1]

In Experimental Example 1, the inventor first applied pure pollen derived from Chinese pear (*Pyrus bretschneideri*) to an agar medium composed of 10% sucrose and 1% agarose using a pollination *Bonten* made of feather. Next, the inventor sprayed the pollen activation solution 1 according to the present embodiment, in which pollen was not dispersed and which was contained in the container 3, by the sprayer 2 onto the agar medium subjected to application of the pure pollen. The inventor then cultured (incubated) the resultant on the agar medium subjected to application of the pollen followed by spraying of the pollen activation solution 1 in a mist form while keeping the medium at 25°C for 24 hours, and then observed and measured pollen germination rates and pollen tube lengths using a fluorescent microscope. In Experimental Example 1, the aqueous solution contained in the pollen activation solution 1 was generated by the above generation method, stored in a refrigerator at about 4°C, taken out of the refrigerator during the experiments, left to stand to reach room temperature, and then used. In addition, in Experimental Example 1, the powdered charcoal contained in the pollen activation solution 1 was added to an aqueous solution and then dispersed using a tabletop ultrasonic bath.

Sucrose, boric acid, magnesium sulfate heptahydrate, calcium chloride, potassium chloride, and gelatin added to the pollen activation solution 1, as well as sucrose and agarose constituting the agar medium used herein, were all manufactured by FUJIFILM Wako Pure Chemical Corporation. Pure pollen derived from Chinese pears used herein was manufactured by KOBAYASHI BAG MFG. CO., LTD. For the *Bonten,* a product under the trade name "GT-406" manufactured by Green Bell Co., Ltd. was used. For the sprayer 2, a product under the trade name "Wasser (registered trademark) _commo009 Cordless Sprayer" manufactured by Taiga Shoji Co., Ltd. was used. For the fluorescence microscope, a product under the trade name "IX73" manufactured by Olympus Corporation was used. For the tabletop ultrasonic bath, a product under the trade name "Bransonic (registered trademark) M2800-J" manufactured by Yamato Scientific Co., Ltd. was used.

### [Experimental Examples 2 to 7]

In Experimental Examples 2 to 7, the inventor performed the same procedure as in Experimental Example 1, except that the amounts of powdered charcoal added to and contained in the pollen activation solution 1 were 25 mg (Experimental Example 2), 50 mg (Experimental Example 3), 75 mg (Experimental Example 4), 150 mg (Experimental Example 5), 200 mg (Experimental Example 6), and 250 mg (Experimental Example 7) per 10 mL of the aqueous solution, and then observed and measured pollen germination rates and pollen tube lengths.

### [Comparative Example 1]

In Comparative Example 1, the inventor performed the same procedure as in Experimental Examples 1 to 7, except for not spraying the pollen activation solution 1 in a mist form, and then observed and measured pollen germination rates and the lengths of pollen tubes.

### [Comparative Example 2]

In Comparative Example 2, the inventor performed the same procedure as in Experimental Examples 1 to 7 and Comparative Example 1, except for not adding powdered charcoal to the aqueous solution contained in the pollen activation solution 1, and then observed and measured pollen germination rates and pollen tube lengths.

### [Experimental results of Experimental Examples regarding pollen inactivation]

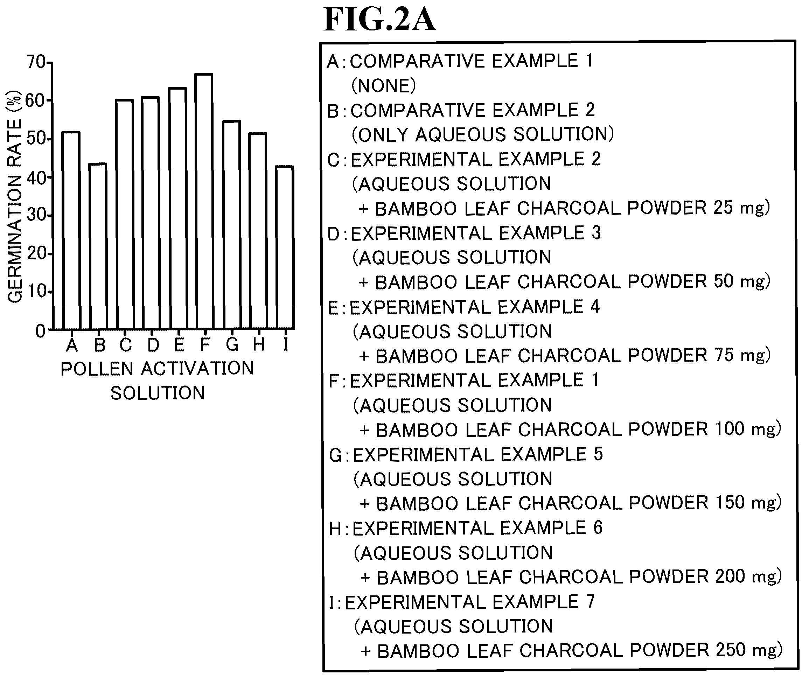

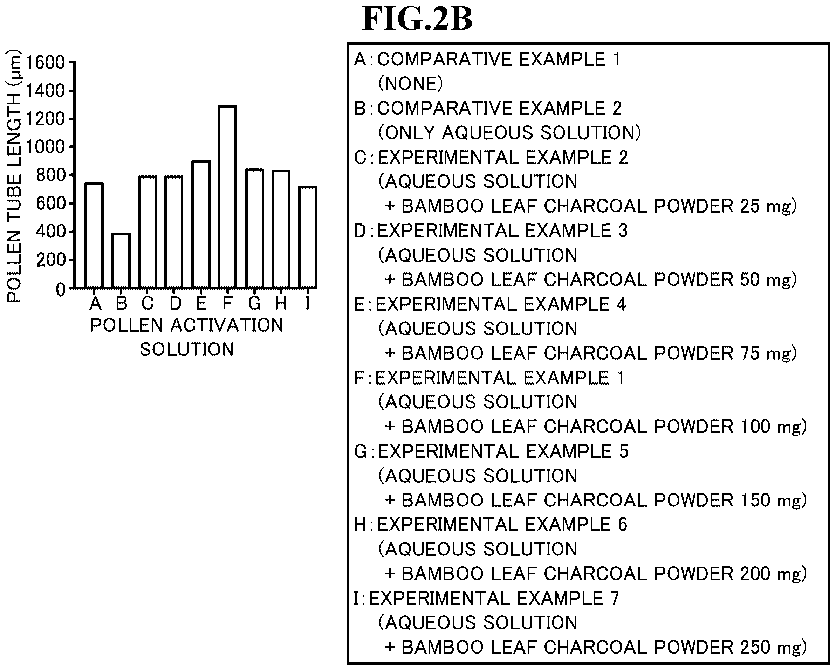

The results of the experiments are as illustrated in FIG. 2A and FIG. 2B. The pollen germination rates illustrated in FIG. 2A are the average values (%) of the pollen germination rates when five trials were performed for each of Experimental Examples 1 to 7 and Comparative Examples 1 and 2, and the pollen tube lengths illustrated in FIG. 2B are the average values (µm) of the pollen tube lengths when five trials were performed for each of Experimental Examples 1 to 7 and Comparative Examples 1 and 2.

As illustrated in FIG. 2A, the pollen germination rates were about 52% in Comparative Example 1 and about 44% in Comparative Example 2, while the pollen germination rates were about 66% in Experimental Example 1, about 60% in Experimental Example 2, about 61% in Experimental Example 3, about 63% in Experimental Example 4, about 55% in Experimental Example 5, about 50% in Experimental Example 6, and about 44% in Experimental Example 7. As a result, it can be seen that the germination rate in Comparative Example 2, in which only the aqueous solution was sprayed, decreased through 24 hours of incubation, compared with Comparative Example 1, in which no aqueous solution was sprayed. On the other hand, it can be seen that the germination rates in Experimental Examples 1 to 7, in which an aqueous solution containing powdered charcoal added thereto was sprayed, were each equal to or higher than that in Comparative Example 2, in which only the aqueous solution was sprayed, through 24 hours of incubation. In particular, it can be seen that the germination rates in Experimental Examples 1 to 6, in which 50 mg to 200 mg of powdered charcoal was added to 10 mL of the aqueous solution, were each equal to or higher than that in Comparative Example 1, in which no aqueous solution was sprayed, through 24 hours of incubation.

Also, as illustrated in FIG. 2B, the pollen tube lengths were about 760 µm in Comparative Example 1 and about 380 µm in Comparative Example 2, while the pollen tube lengths were about 1,280 µm in Experimental Example 1, about 780 µm in Experimental Examples 2 and 3, about 900 µm in Experimental Example 4, about 820 µm in Experimental Example 5, about 800 µm in Experimental Example 6, and about 700 µm in Experimental Example 7. As a result, it can be seen that the pollen tube elongation in Comparative Example 2, in which only the aqueous solution was sprayed, decreased through 24 hours of incubation, compared with Comparative Example 1, in which no aqueous solution was sprayed. On the other hand, it can be seen that the pollen tube elongations in Experimental Examples 1 to 7, in which an aqueous solution containing powdered charcoal added thereto was sprayed, increased through 24 hours of incubation compared with Comparative Example 2, in which only the aqueous solution was sprayed. In particular, the pollen tube elongations in Experimental Examples 1 to 6, in which 50 mg to 200 mg of powdered charcoal was added to 10 mL of the aqueous solution, increased through 24 hours of incubation, even compared with Comparative Example 1, in which no aqueous solution was sprayed.

Therefore, it can be seen that the pollen activation solution 1 according to Experimental Examples 1 to 7 can extend the period from pollen dispersion to pollen inactivation longer than the pollen activation solution according to Comparative Example 2. In other words, it can be seen that the pollen activation solution according to the present disclosure can extend the period from pollen dispersion to pollen inactivation, longer than the pollen activation solution to which powdered charcoal is not added.

### [Experimental Examples regarding charcoal types]

The inventor also conducted experiments to confirm whether or not the charcoal added to the pollen activation solution according to the present disclosure needs to be in a powder form.

### [Experimental Example 11]

In Experimental Example 11, the inventor performed the same procedure as in Experimental Example 1, and then observed and measured pollen germination rates.

### [Comparative Examples 11 and 12]

In Comparative Examples 11 and 12, the inventor performed the same procedure as in Comparative Examples 1 and 2, and then observed and measured pollen germination rates.

### [Comparative Examples 13 to 15]

In Comparative Examples 13 to 15, the inventor performed the same procedure as in Experimental Example 11 and Comparative Examples 11 and 12, except for adding, instead of 100 mg of powdered charcoal, 100 µL of India ink (Comparative Example 13), 100 mg of rapeseed oil smoke ink (Comparative Example 14), or 100 mg of squid ink (Comparative Example 15) to the pollen activation solution 1, and then observed and measured pollen germination rates.

The ink used herein was a product under the trade name "Liquid Ink No. 17" manufactured by Daiso Industries Co., Ltd. The rapeseed oil smoke ink used herein was solid ink under the trade name "Suzuka Ink Shinseido (registered trademark)" manufactured by Shinseido Co., Ltd. The squid ink used herein was a product under the trade name "Riofresh (registered trademark)" manufactured by Toyochem Co., Ltd.

### [Experimental results for Experimental Examples regarding charcoal types]

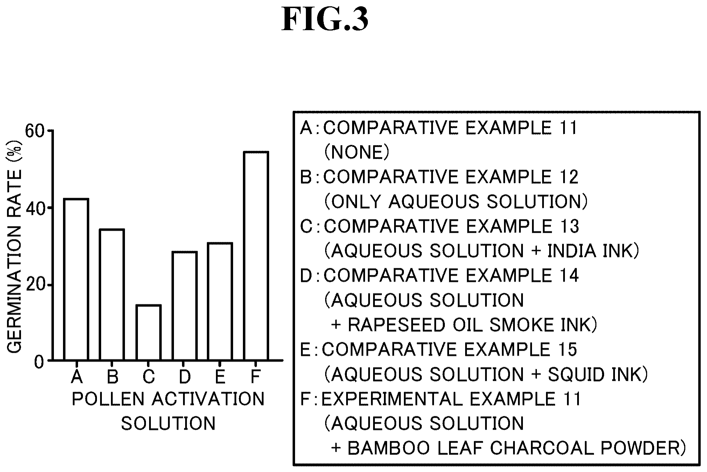

The results of the experiments are as illustrated in FIG. 3. The pollen germination rates illustrated in FIG. 3 are the average values (%) of the pollen germination rates when five trials were performed for each of Experimental Example 11 and Comparative Examples 11 to 15. As illustrated in FIG. 3, the pollen germination rates were about 43% in Comparative Example 11, about 34% in Comparative Example 12, about 13% in Comparative Example 13, about 28% in Comparative Example 14, and about 30% in Comparative Example 15, while the pollen germination rate was about 55% in Experimental Example 11. As a result, it can be seen that the germination rate in Comparative Example 12, in which only the aqueous solution was sprayed, decreased through 24 hours of incubation compared with Comparative Example 11, in which no aqueous solution was sprayed. It can also be seen that the germination rates in Comparative Examples 13 to 15, in which aqueous solutions containing various types of non-powdered charcoal were sprayed, decreased through 24 hours of incubation compared with Comparative Example 12, in which only the aqueous solution was sprayed. On the other hand, it can be seen that the germination rates in Experimental Examples 1 to 7, in which the aqueous solution containing powdered charcoal added thereto was sprayed, increased through 24 hours of incubation compared with Comparative Examples 11 to 15.

Therefore, it can be seen that the pollen activation solution 1 according to Experimental Example 11 can extend the period from pollen dispersion to pollen inactivation longer than the pollen activation solution according to Comparative Example 12, while the pollen activation solutions according to Comparative Examples 13 to 15 cannot extend the period longer than the pollen activation solution according to Comparative Example 12. In other words, it can be seen that the pollen activation solution according to the present disclosure has the effect of extending the period from pollen dispersion to pollen inactivation longer than a pollen activation solution to which various types of charcoal were not added, while adding various types of charcoal that are not in a powder form to the pollen activation solution does not have the effect of extending this period.

### [Experimental Examples regarding pollen types]

The inventor also conducted experiments to confirm whether or not the effect of extending the period from pollen dispersion to pollen inactivation varies depending on the type of pollen dispersed in the pollen activation solution according to the present disclosure.

### [Experimental Examples 21 to 25]

In Experimental Example 11, the inventor performed the same procedure as in Experimental Example 1, except for applying, instead of pure pollen derived from Chinese pear, cherry pollen (Experimental Example 21), apricot pollen (Experimental Example 22), plum pollen (Experimental Example 23), peach pollen (Experimental Example 24), and apple pollen (Experimental Example 25) to agar medium, and then observed and measured pollen germination rates.

### [Comparative Examples 21 to 25]

In Comparative Examples 21 to 25, the inventor performed the same procedure as in Comparative Example 1, except for applying, instead of pure pollen derived from Chinese pears, cherry pollen (Comparative Example 21), apricot pollen (Comparative Example 22), plum pollen (Comparative Example 23), peach pollen (Comparative Example 24), and apple pollen (Comparative Example 25) to agar medium, and then observed and measured pollen germination rates.

### [Comparative Examples 26 to 30]

In Comparative Examples 26 to 30, the inventor performed the same procedure as in Comparative Example 2, except for applying, instead of pure pollen derived from Chinese pears, cherry pollen (Comparative Example 26), apricot pollen (Comparative Example 27), plum pollen (Comparative Example 28), peach pollen (Comparative Example 29), and apple pollen (Comparative Example 30) to agar medium, and then observed and measured pollen germination rates.

### [Experimental results of Experimental Examples regarding pollen types]

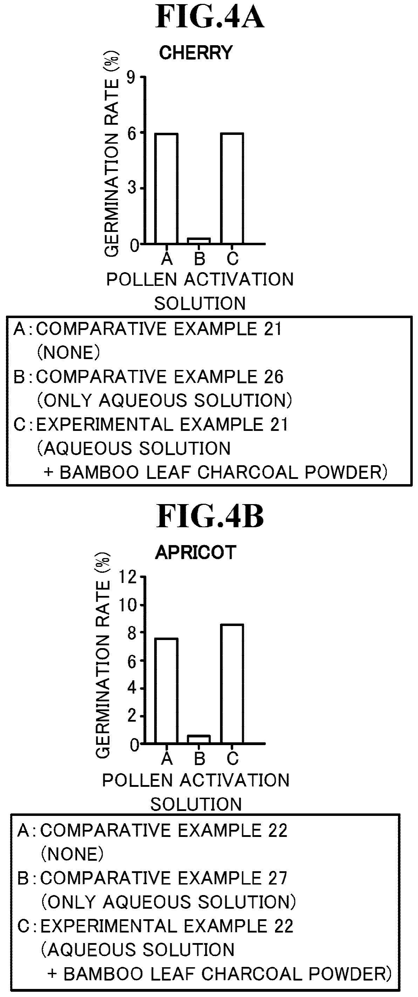

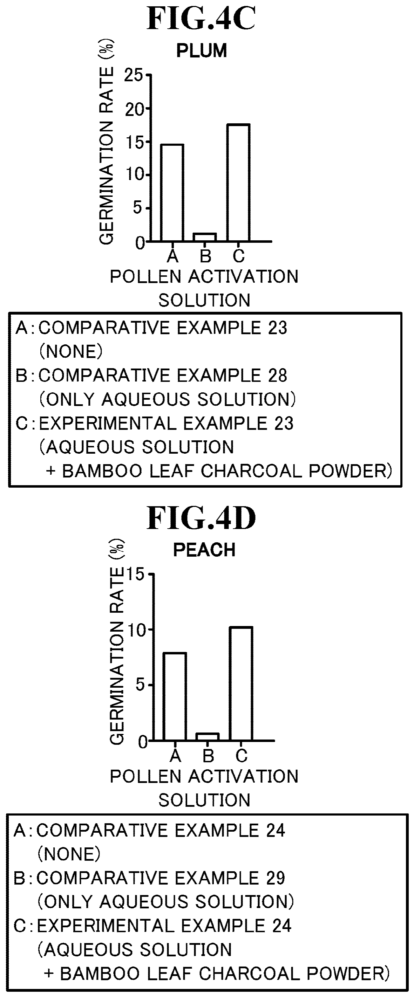

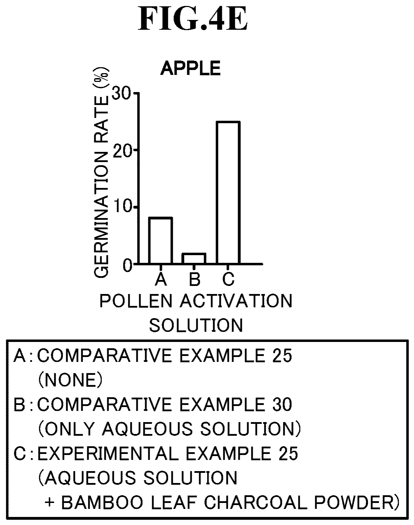

The results of the experiments are as illustrated in FIG. 4A to FIG. 4E. The pollen germination rates illustrated in FIG. 4A to FIG. 4E are the average values (%) of the pollen germination rates when five trials were performed for each of Experimental Examples 21 to 25 and Comparative Examples 21 to 30. As illustrated in FIG. 4A, the germination rates of cherry pollen were about 6% in Comparative Example 21 and about 0.3% in Comparative Example 26, while about 6% in Experimental Example 21. As illustrated in FIG. 4B, the germination rates of apricot pollen were about 7.6% in Comparative Example 22 and about 0.7% in Comparative Example 27, while about 8.8% in Experimental Example 22. As illustrated in FIG. 4C, the germination rates of plum pollen were about 14.5% in Comparative Example 23 and about 1.0% in Comparative Example 28, while about 18.0% in Experimental Example 23. As illustrated in FIG. 4D, the germination rates of peach pollen were about 8% in Comparative Example 24 and about 0.8% in Comparative Example 29, while about 11% in Experimental Example 24. As illustrated in FIG. 4E, the germination rates of apple pollen were about 8% in Comparative Example 25 and about 2% in Comparative Example 30, while about 25% in Experimental Example 26.

As a result, it can be seen that the germination rates in Comparative Examples 26 to 30, in which only the aqueous solution was sprayed, decreased through 24 hours of incubation compared with Comparative Examples 21 to 25, in which no aqueous solution was sprayed. On the other hand, the germination rates in Experimental Examples 21 to 25, in which an aqueous solution containing powdered charcoal added thereto was sprayed, increased through 24 hours of incubation compared with Comparative Examples 26 to 30, in which only the aqueous solution was sprayed, and were equal to or higher than Comparative Examples 21 to 25, in which no aqueous solution was sprayed.

Therefore, it can be seen that the pollen activation solutions 1 according to Experimental Examples 21 to 25 can extend the period from pollen dispersion to pollen inactivation longer than the pollen activation solutions according to Comparative Examples 26 to 30. In other words, it can be seen that the pollen activation solution according to the present disclosure can extend the period from pollen dispersion to pollen inactivation longer than a pollen activation solution to which powdered charcoal was not added, regardless of the type of pollen.

### [Experimental Examples regarding pollination at low temperatures]

The inventor also conducted experiments to confirm whether or not the pollen activation solution according to the present disclosure exhibits its effect even at low temperatures when pollen is dispersed in the pollen activation solution.

### [Experimental Example 31]

In Experimental Example 31, the inventor sprayed the pollen activation solution 1 according to the present embodiment onto an agar medium subjected to application of pure pollen, as in Experimental Example 1, and then cultured (incubated) the resultant on the agar medium subjected to application of pollen followed by spraying of the pollen activation solution 1 in a mist form, while keeping the medium for 24 hours at 4°C, and then observed and measured pollen germination rates using a fluorescent microscope.

### [Comparative Example 31]

In Comparative Example 31, the inventor performed the same procedure as in Experimental Example 31 except for not spraying the pollen activation solution 1 in a mist form, and then observed and measured pollen germination rates and pollen tube lengths.

### [Experimental results of Experimental Examples regarding pollination at low temperatures]

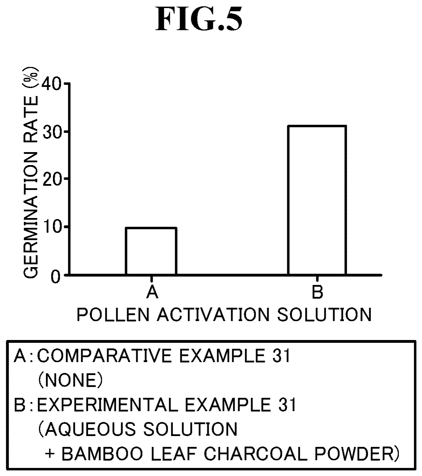

The results of the experiments are as illustrated in FIG. 5. The pollen germination rates illustrated in FIG. 5 are the average values (%) of the pollen germination rates when three trials were performed for each of Experimental Example 31 and Comparative Example 31. As illustrated in FIG. 5, the pollen germination rate was about 10% in Comparative Example 31 while about 32% in Experimental Example 31. As a result, it can be seen that the germination rate of Experimental Example 31, in which the aqueous solution containing powdered charcoal added thereto was sprayed, greatly increased through 24 hours of incubation compared with Comparative Example 31.

Therefore, it can be seen that the pollen activation solution 1 according to Experimental Example 31 can significantly increase the pollen germination rate in a 4°C environment compared with a case where no pollen activation solution is added as in Comparative Example 31. In other words, the pollen activation solution according to the present disclosure can significantly increase the pollen germination rate while extending the period from pollen dispersion and pollen inactivation under the extremely low temperature environment of 4°C.

### [Experimental Examples regarding powdered charcoal types and particle sizes]

The inventor also conducted experiments to confirm whether or not the pollen activation solution according to the present disclosure would exhibit the effect even if the type and particle size of the charcoal were varied.

### [Experimental Example 41]

In Experimental Example 41, the inventor performed the same procedure as in Experimental Example 1, and then observed and measured pollen germination rates.

### [Experimental Examples 42 to 45]

In Experimental Examples 42 to 45, the inventor performed the same procedure as in Experimental Example 1, except for using, instead of bamboo leaf charcoal powder made by pulverizing bamboo leaf charcoal to a particle size of 3 µm, hemp husk charcoal powder made by pulverizing hemp husk charcoal to a particle size of 5 µm (Experimental Example 42), oak charcoal powder made by pulverizing oak charcoal to a particle size of 8 µm (Experimental Example 43), coconut shell charcoal powder made by pulverizing coconut shell charcoal to a particle size of 10 µm (Experimental Example 44), and bamboo charcoal powder made by pulverizing bamboo charcoal; that is, bamboo culm charcoal, to a particle size of 15 µm (Experimental Example 45), and then observed and measured pollen germination rates.

### [Comparative Example 41]

In Comparative Example 41, the inventor performed the same procedure as in Comparative Example 1, and then observed and measured pollen germination rates.

### [Experimental results of Experimental Examples regarding powdered charcoal types and particle sizes]

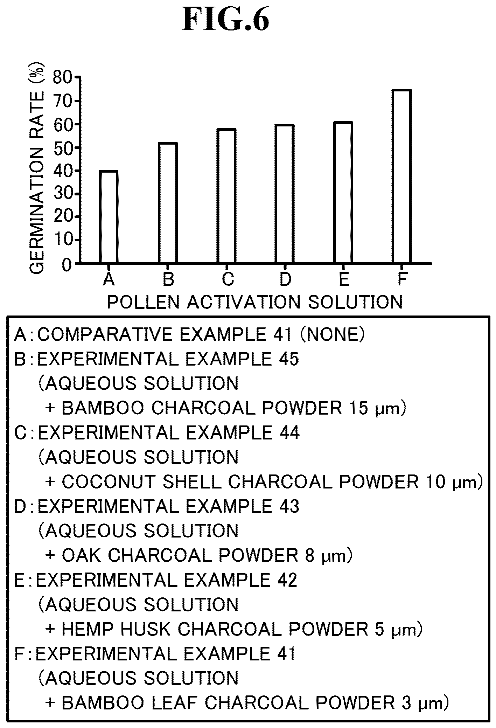

The results of the experiments are as illustrated in FIG. 6. The pollen germination rates illustrated in FIG. 6 are the average values (%) of the pollen germination rates when three trials were performed for each of Experimental Examples 41 to 45 and Comparative Example 41. As illustrated in FIG. 6, the pollen germination rate was about 40% in Comparative Example 41, while the pollen germination rates were about 75% in Experimental Example 41, about 62% in Experimental Example 42, about 60% in Experimental Example 43, about 57% in Experimental Example 44, and about 53% in Experimental Example 45. As a result, it can be seen that the germination rates in Experimental Examples 41 to 45, in which the aqueous solution containing powdered charcoal added thereto was sprayed, increased through 24 hours of incubation, regardless of the type of powdered charcoal, compared with Comparative Example 41, in which no aqueous solution was sprayed. In particular, it can be seen that even the pollen germination rate in Experimental Example 45, which was the lowest, was equal to or higher than the pollen germination rate (about 52%) in Comparative Example 1 illustrated in FIG. 2A, which was the highest experimental result among the comparative examples in which the same procedure was performed as in Comparative Example 41.

Therefore, it can be seen that the pollen activation solution 1 according to Experimental Examples 41 to 45 can increase the pollen germination rate more than a case in which no pollen activation solution is added as in Comparative Example 41. In other words, it can be seen that the pollen activation solution according to the present disclosure can increase the pollen germination rate more than a case in which no pollen activation solution is used, while extending the period from pollen dispersion to pollen inactivation, regardless of the type of powdered charcoal, as long as the particle size is at least 3 µm or more and 15 µm or less. It can also be seen that the pollen activation solution according to the present disclosure can increase the pollen germination rate compared with a case in which no pollen activation solution is used, while extending the period from pollen dispersion to pollen inactivation, as long as the type of powdered charcoal is at least one of bamboo leaf charcoal, hemp husk charcoal, oak charcoal, coconut shell charcoal, and bamboo charcoal, within the particle size range described above.

The reason why the highest germination rate was achieved in Experimental Example 41 among Experimental Examples 41 to 45 above is not only because the particle size of the charcoal in Experimental Example 41 was the smallest, but also because the bamboo leaf charcoal used in Experimental Example 41 had a higher silicon content than the other charcoal types used in Experimental Examples 42 to 45 (hemp husk charcoal, oak charcoal, coconut shell charcoal, bamboo charcoal).

### [Experimental Examples regarding activated charcoal]

The inventor also conducted experiments to confirm whether or not the charcoal added to the pollen activation solution according to the present disclosure exhibits the effect even if it is so-called activated charcoal. Here, activated charcoal is a substance mainly composed of porous carbon subjected to a chemical or physical treatment, specifically a treatment called activation treatment or activating treatment, in order to enhance the adsorption effect. For this reason, activated charcoal is used for the purpose of selectively separating, removing, or purifying a specific substance, for example.

### [Experimental Example 51]

In Experimental Example 51, the inventor performed the same procedure as in Experimental Example 1, and then observed and measured pollen germination rates.

### [Comparative Example 51]

In Comparative Example 51, the inventor performed the same procedure as in Experimental Example 51 and Comparative Example 1, except for adding, instead of 100 mg of powdered charcoal, 100 mg of powdered activated charcoal to the pollen activation solution 1, and then observed and measured pollen germination rates. The activated charcoal used herein was manufactured by FUJIFILM Wako Pure Chemical Corporation.

Here, activated charcoal is known to have namely a BET specific surface area of about 1.6 × 10³m²/g, as measured by the conventionally known BET method (for example, Satoshi Kobayashi, "Measurement of specific surface area and pore size distribution in evaluation of surface physical properties of porous materials", [online], October 31, 2019, Nagano Prefecture General Industrial Technology Center [searched January 22, 2024], Internet <URL: https://www.gitc.pref.nagano.lg.jp/reports/pdf/R1/R1M64.pdf>). For this reason, the BET specific surface area of the bamboo leaf charcoal before powderization, which is a raw material for the bamboo leaf charcoal powder used in Experimental Example 51, must be at least smaller than 1.6 × 10³m²/g. That is, in the pollen activation solution according to the present disclosure, the BET specific surface area of the charcoal before being pulverized must be at least smaller than 1.6 × 10³ m²/g.

### [Experimental results of Experimental Examples regarding activated charcoal]

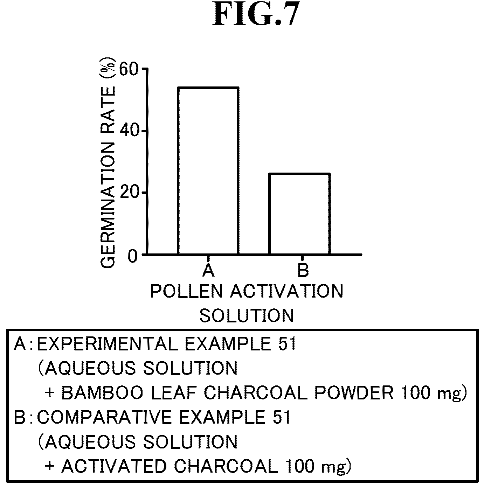

Experimental results are as illustrated in FIG. 7. The pollen germination rates illustrated in FIG. 7 are the average values (%) of pollen germination rates when three trials were performed for each of Experimental Example 51 and Comparative Example 51. As illustrated in FIG. 7, the pollen germination rate in Comparative Example 51 was about 25%, while about 55% in Experimental Example 51. As a result, it can be seen that the germination rate in Comparative Example 51, in which the aqueous solution containing powdered activated charcoal added thereto was sprayed, decreased through 24 hours of incubation compared with Experimental Example 51, in which the aqueous solution containing powdered charcoal other than activated charcoal added thereto was sprayed. It can be seen that the germination rate in Comparative Example 51, in which the aqueous solution containing powdered activated charcoal added thereto was sprayed, decreased compared with Comparative Example 11, in which no aqueous solution was sprayed, and Comparative Example 12, in which only an aqueous solution was sprayed, as well as Comparative Examples 13 to 15, in which the aqueous solutions containing various types of non-powdered charcoal added thereto were sprayed, as illustrated in FIG. 3.

Therefore, it can be seen that the pollen activation solution 1 according to Experimental Example 51 can extend the period from pollen dispersion to pollen inactivation longer than the pollen activation solution according to Comparative Example 51, while the pollen activation solution according to Comparative Example 51 cannot extend this period longer than the pollen activation solution according to Comparative Example 12 as in Comparative Examples 13 to 15. In other words, it can be seen that the pollen activation solution according to the present disclosure has the effect of extending the period from pollen dispersion to pollen inactivation longer than a pollen activation solution to which powdered activated charcoal is not added, while adding powdered activated charcoal to the pollen activation solution does not have the effect of extending this period.

The reason why adding powdered charcoal that is not activated charcoal is unable to extend the period from pollen dispersion in the pollen activation solution to pollen inactivation has not yet been specified. Here, the diameter of the pores of activated charcoal is about 1 nm, which is smaller than the diameter of the pores of non-activated charcoal, which is 20 µm to 60 µm, so the surface area of activated charcoal when powdered is larger than that of non-activated charcoal. For this reason, the reason why the period cannot be extended is that, for example, when activated charcoal is attached to pollen dispersed in an aqueous solution, the contact area of the activated charcoal is smaller than that of non-activated charcoal, so water can penetrate more easily into pollen with activated charcoal attached thereto than pollen without non-activated charcoal attached thereto, making the shell less likely to be damaged, and thus water can penetrate more easily into the pollen shell, the contents of the pollen expand due to the osmotic pressure of water before germination, making it more likely to be damaged or burst.

In addition, when the pollen activation solution according to Comparative Example 51 was repeatedly sprayed using a sprayer, it was found that powdered activated charcoal was adsorbed to the nozzle, causing clogging more frequently than that in the case of the pollen activation solution according to Experimental Example 51.

Therefore, it was found that the use of a pollen activation solution containing powdered activated charcoal added thereto is more difficult than the use of a pollen activation solution containing powdered non-activated charcoal added thereto.

### [Experimental Examples regarding aqueous solution types]

The inventor also conducted experiments to confirm whether or not the pollen activation solution according to the present disclosure exhibits its effect more significantly than other pollen activation solutions known in the art.

### [Experimental Example 61]

In Experimental Example 61, the inventor first prepared 100 mL of the pollen activation solution 1 according to the present embodiment in the same manner as in Experimental Example 1, and then dispersed 300 mg of pure pollen derived from Chinese pears. Next, the inventor applied by spraying the pollen activation solution with the pollen dispersed by hand spraying therein toward the same agar medium as in Experimental Example 1. Then, the inventor incubated the resultant on the agar medium subjected to application of the pollen activation solution 1 with pollen dispersed therein while keeping the medium at 20° C for 24 hours, and then observed and measured pollen germination rates using a fluorescent microscope. In Experimental Example 61, the pollen was added to the pollen activation solution 1 after charcoal dispersion in the same step as in Experimental Example 1, and was dispersed by stirring. In addition, agar, food coloring, and sucrose added to the pollen activation solution used herein were manufactured by FUJIFILM Wako Pure Chemical Corporation.

### [Comparative Example 61]

In Comparative Example 61, the inventor performed the same procedure as in Experimental Example 61, except for using 100 mL of distilled water instead of 100 mL of the pollen activation solution 1 described above, and then observed and measured pollen germination rates.

### [Comparative Example 62]

In Comparative Example 62, the inventor performed the same procedure as in Experimental Example 61 and Comparative Example 61, except for using, instead of the above-mentioned 100 mL of pollen activation solution 1, a pollen activation solution prepared by referring to the Japanese Pear Solution Pollination Manual (URL: https://www.naro.go.jp/publicity_report/publication/files/nasi_jufun.pdf) of the National Agriculture and Food Research Organization as an example of other conventionally known pollen activation solutions, and then observed and measured pollen germination rates. Specifically, in Comparative Example 62, agar was dissolved in 100 mL of heated distilled water, and the resultant was left to reach room temperature, and 10 mg of food coloring (New Coccin) and 10 g of sucrose were dissolved therein to prepare 100 mL of another conventionally known pollen activation solution. Then, the inventor performed the same procedure as in Experimental Example 61, except for using other conventionally known pollen activation solutions prepared instead of the pollen activation solution 1, and then observed and measured pollen germination rates.

### [Experimental results of the Experimental Examples regarding aqueous solution types]

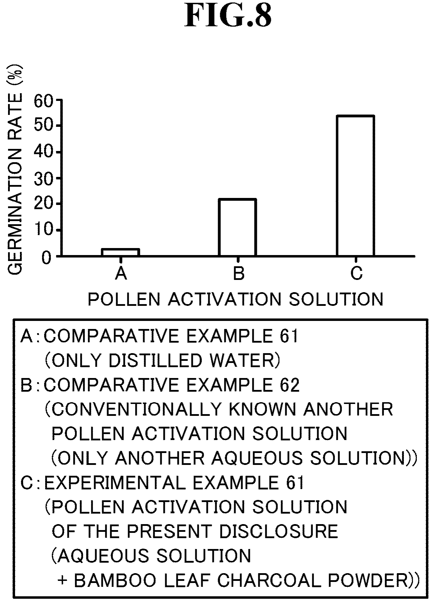

The results of the experiments are as illustrated in FIG. 8. The pollen germination rates illustrated in FIG. 8 are the average values (%) of the pollen germination rates when three trials were performed for each of Experimental Example 61 and Comparative Examples 61 and 62. As illustrated in FIG. 8, the pollen germination rates were about 3% in Comparative Example 61 and about 22% in Comparative Example 62, while about 53% in Experimental Example 61. As a result, it can be seen that the germination rate in Comparative Example 62, in which the pollen dispersed in another conventionally known pollen activation solution was applied, increased through 24 hours of incubation compared with Comparative Example 61, in which the pollen dispersed in distilled water was applied. In addition, it can be seen that the germination rate in Experimental Example 61, in which the pollen dispersed in the pollen activation solution 1 with powdered charcoal dispersed therein was applied, significantly increased through 24 hours of incubation compared with Comparative Example 62, in which the pollen dispersed in another conventionally known pollen activation solution was applied.

Therefore, it can be seen that the pollen activation solution according to Experimental Example 61 can extend the period from pollen dispersion to pollen inactivation longer than the pollen activation solution according to Comparative Example 62. Specifically, it can be seen that the pollen activation solution according to the present disclosure can extend the period from pollen dispersion to pollen inactivation longer than another conventionally known pollen activation solution.

### [Experimental Examples regarding silicon]

Here, the inventor has deduced that, since the bamboo leaf charcoal powder and oak charcoal powder used in the above experiments are known to contain silicon, so-called silica water may be useful as an ingredient of the aqueous solution contained in the pollen activation solution according to the present disclosure. For this reason, the inventor conducted experiments to confirm whether or not the aqueous solution with powdered charcoal dispersed therein exhibits its effect even if it is silica water.

### [Experimental Example 71]

In Experimental Example 71, the inventor performed the same procedure as in Experimental Example 1, except for performing incubation on the agar medium subjected to application of pollen followed by spraying of the pollen activation solution 1 in a mist form while keeping the medium at 20°C for 24 hours, and then observed and measured pollen germination rates.

### [Experimental Example 72]

In Experimental Example 72, the inventor performed the same procedure as in Experimental Example 71, except for adding 500 µL of a 20% potassium silicate aqueous solution as an example of silica water to the pollen activation solution 1 according to the embodiment, and then observed and measured pollen germination rates. The 20% potassium silicate aqueous solution added to the pollen activation solution 1 was manufactured by FUJIFILM Wako Pure Chemical Corporation. In addition, since the 20% potassium silicate aqueous solution is alkaline, a small amount of hydrochloric acid was added to adjust the pollen activation solution 1 to be neutral, and thus to have a pH of 7.

### [Experimental Examples 81 and 82]

as in Experiments 71 and 72, except for adding 100 mg of oak charcoal powder instead of 100 mg of bamboo leaf charcoal powder, and then observed and measured pollen germination rates.

### [Experimental Examples 91 and 92]

In Experimental Examples 91 and 92, the inventor performed the same procedure as in Experimental Examples 81 and 82, except for performing incubation on the agar medium subjected to application of pollen followed by spraying of the pollen activation solution in a mist form while keeping the medium at 4°C for 24 hours, and then observed and measured pollen germination rates.

### [Comparative Example 71]

Comparative Example 1, and then observed and measured pollen germination rates and pollen tube lengths.

### [Comparative Example 72]

In Comparative Example 72, the inventor performed the same procedure as in Experimental Example 72, except for not adding 100 mg of bamboo leaf charcoal powder to the above-mentioned aqueous solution, and then observed and measured pollen germination rates.

### [Comparative Example 81]

In Comparative Example 81, the inventor performed the same procedure as in Comparative Example 1, and then observed and measured pollen germination rates and pollen tube lengths.

### [Comparative Example 91]

In Comparative Example 91, the inventor performed the same procedure as in Comparative Example 81, except for performing incubation on the agar medium with pollen applied thereto while keeping the medium at 4°C for 24 hours, and then observed and measured pollen germination rates.

### [Experimental results of Experimental Examples regarding silicon]

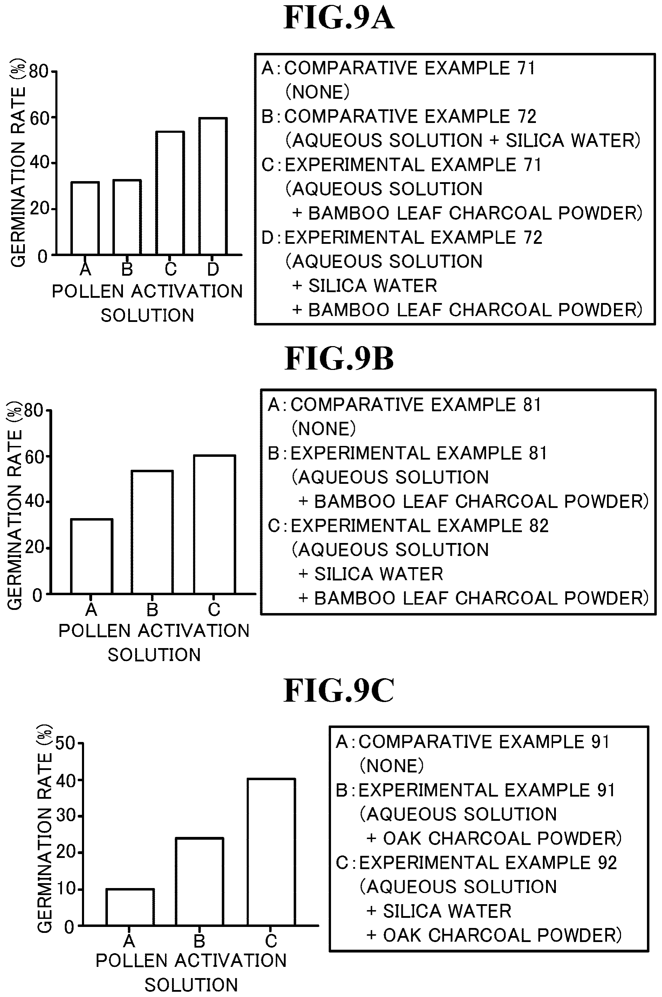

The results of the experiments are as illustrated in FIGS. 9A to 9C. The pollen germination rates illustrated in FIGS. 9A to 9C are the average values (%) of the pollen germination rates when three trials were performed for each of Experimental Examples 71, 72, 81, 82, 91, and 92 and Comparative Examples 71, 72, 81, and 91. As illustrated in FIG. 9A, the pollen germination rates were about 32% in Comparative Example 71 and about 33% in Comparative Example 72, while about 54% in Experimental Example 71 and about 60% in Experimental Example 72. As a result, through 24 hours of incubation, the germination rate in Comparative Example 72, in which only the aqueous solution containing silica water added thereto was sprayed, was similar to that in Comparative Example 71, in which no aqueous solution was sprayed, and it can be seen that the germination rate does not increase compared with Experimental Example 71, in which an aqueous solution containing bamboo leaf charcoal powder added thereto but containing no silica water was sprayed. On the other hand, it can be seen that the germination rate in Experimental Example 72, in which an aqueous solution containing not only silica water but also bamboo leaf charcoal powder added thereto was sprayed, significantly increased compared with Comparative Examples 71 and 72 through 24 hours of incubation, and further increased compared with Experimental Example 71, in which an aqueous solution containing bamboo leaf charcoal powder added thereto but not containing silica water was sprayed.

Also, as illustrated in FIG. 9B, the pollen germination rate was about 32% in Comparative Example 81, while about 53% in Experimental Example 81 and about 60% in Experimental Example 82. As a result, it can be seen that the pollen germination rate in Experimental Example 82, in which an aqueous solution containing not only silica water but also oak charcoal powder added was sprayed, significantly increased through 24 hours of incubation compared with Comparative Example 81, in which no aqueous solution was sprayed, and even more increased compared with Experimental Example 81, in which an aqueous solution containing oak charcoal powder added thereto but not containing silica water was sprayed.

Also, as illustrated in FIG. 9C, the pollen germination rate was about 10% in Comparative Example 91, while the pollen germination rates were about 28% in Experimental Example 91 and about 40% in Experimental Example 92. As a result, it can be seen that the germination rate in Experimental Example 92, in which an aqueous solution containing not only silica water but also oak charcoal powder added thereto was sprayed, significantly increased through 24 hours of incubation compared with Comparative Example 91, in which no aqueous solution was sprayed, and further significantly increased even compared with Experimental Example 91, in which an aqueous solution containing oak charcoal powder added thereto but not containing silica water was sprayed.

Therefore, it can be seen that the pollen activation solution 1 according to Experimental Examples 72, 82, and 92 can significantly increase the pollen germination rate compared with the pollen activation solution according to Comparative Example 72, and can further increase the pollen germination rate compared with the pollen activation solution 1 according to Experimental Examples 71, 81, and 91. Specifically, it can be seen that the pollen activation solution according to the present disclosure can further increase the pollen germination rate through addition of silica water, regardless of the type of powdered charcoal, while extending the period from pollen dispersion to pollen inactivation. In particular, it can be seen that the pollen activation solution according to the present disclosure can further increase the pollen germination rate through addition of silica water, while extending the period from pollen dispersion to pollen inactivation, even in an extremely low temperature environment of 4°C.

The difference in germination rate between Experimental Example 71 and Experimental Example 72, in which bamboo leaf charcoal powder was used, was almost the same as the difference in germination rate between Experimental Example 81 and Experimental Example 82, in which oak charcoal powder was used. Therefore, it can be seen that the pollen activation solution according to the present disclosure can further increase the pollen germination rate while extending the period from pollen dispersion to pollen inactivation through addition of silica water, regardless of the silicon content of the powdered charcoal. Note that, in Experimental Examples 81 and 82, in which oak charcoal powder was used, the difference in germination rate was about the same as in Experimental Examples 71 and 72, in which bamboo leaf charcoal powder was used, but adding silica water to the pollen activation solution according to the present disclosure is considered to be particularly preferable when charcoal with a lower silicon content than bamboo leaf charcoal powder is added, such as hemp husk charcoal, oak charcoal, coconut shell charcoal, and bamboo charcoal used in the above-mentioned Experimental Examples 42 to 45.

### (Example of change)

In the present embodiments, sucrose, boric acid, magnesium sulfate heptahydrate, calcium chloride, potassium chloride, and gelatin were added to the aqueous solution as substances that activate pollen germination and pollen tube elongation, but the substances added to the aqueous solution are not limited to these. For example, sorbitol and proline may be added to the aqueous solution as substances that activate pollen germination and pollen tube elongation, similar to the aqueous pollination agent according to Patent Literature 1.

As in the present embodiments, it is preferable to add sucrose, boric acid, magnesium sulfate heptahydrate, calcium chloride, potassium chloride, and gelatin to the aqueous solution as substances that activate pollen germination and pollen tube elongation, but any of these substances may be omitted.

In the present embodiments, 10% sucrose was added to the aqueous solution, but this is not limited thereto and sucrose can be added in any proportion. However, in order to exhibit its effect as an activator, it is preferable to add sucrose in the range of 5% to 30%.

In addition, in the present embodiments, 5 ppm boric acid was added to the aqueous solution, but this is not limited thereto, and boric acid can be added in any proportion. However, in order to exhibit its effect as an activator, it is preferable to add boric acid in the range of 1 to 60 ppm.

In addition, in the present embodiments, 0.1 mM magnesium sulfate heptahydrate was added to the aqueous solution, but this is not limited thereto, and magnesium sulfate heptahydrate can be added in any proportion. However, in order to exhibit its effect as an activator, it is preferable to add magnesium sulfate heptahydrate in the range of 0.1 to 2.0 mM.

In addition, in the present embodiments, 1.0 mM calcium chloride was added to the aqueous solution, but this is not limited thereto, and calcium chloride can be added in any proportion. However, in order to exhibit its effect as an activator, it is preferable to add calcium chloride in the range of 0.1 to 2.0 mM.

In addition, in the present embodiments, 1.0 mM potassium chloride was added to the aqueous solution, but this is not limited thereto, and potassium chloride can be added in any proportion. However, in order to exhibit its effect as an activator, it is preferable to add potassium chloride in the range of 0.1 to 2.0 mM.

In the present embodiments, 0.8% gelatin was added to the aqueous solution, but this is not limited thereto, and gelatin can be added at any ratio. However, in order to exhibit its effect as an activator, gelatin is preferably added in the range of 0.2% to 2.0%.

In the present embodiments, gelatin was added to the aqueous solution, but this is not limited thereto. For example, the same effect can be exhibited by adding a substance such as guar gum, gum Arabic, or agar instead of gelatin.

In the present embodiments, 100 mg of bamboo leaf charcoal powder was added to 10 mL of the aqueous solution, but this is not limited thereto, and bamboo leaf charcoal powder can be added in any proportion. However, in order to exhibit its effect as a substance that extends the period from pollen dispersion to pollen inactivation, it is preferable to add bamboo leaf charcoal powder in an amount ranging from 50 mg to 200 mg to 10 mL of the aqueous solution. In the present embodiments, about 1,080 mg of an activator is contained in 10 mL of the aqueous solution. Therefore, in order to exhibit its effect as a substance that extends the period from pollen dispersion to pollen inactivation, it is preferable to add bamboo leaf charcoal powder in an amount ranging from 0.050 mg to 0.2 mg to 1 mg of an activator.

In the present embodiments, bamboo leaf charcoal powder with an average particle size of 3 µm was added to the aqueous solution, but this is not limited thereto, and charcoal with particle size of any length can be added. However, in order to exhibit its effect as a substance that extends the period from pollen dispersion to pollen inactivation, it is preferable that the average particle size of the bamboo leaf charcoal powder is in the range of 1 to 15 µm.

In the present embodiments, powdered bamboo leaf charcoal was used as the powdered charcoal, but the type of charcoal is not limited thereto as long as it is in a powder form. For example, coal powder that is powdered coal, charcoal powder that is powdered charcoal, such as oak charcoal powder used in Experimental Examples 43, 81 and 82 above, or husk charcoal powder such as hemp husk charcoal powder and coconut shell charcoal powder used in Experimental Examples 42 and 44 above, may be used. Furthermore, substances other than charcoal can be used instead, as long as they are made of powdered carbon constituents, which are substances made of carbon. For example, carbon fiber or graphite crushed to the micro level, or nanocarbon solidified into microsized particles may be used as powdered carbon constituents, and these are also included in the "powdered carbon constituents" in the present disclosure. However, in order to exhibit its effect as a substance that extends the period from pollen dispersion to pollen inactivation, it is preferable that the average particle size of these powdered carbon constituents is in the range of 1 to 15 µm.

Furthermore, the substance added to the aqueous solution is only powdered charcoal, excluding substances that activate pollen germination and pollen tube elongation, but this is not limited thereto, as long as powdered charcoal is added. For example, polyoxyalkylene alkyl ether may be added to the aqueous solution to improve the dispersibility of pollen, peach resin may be added to the aqueous solution to improve attachment to the pistil 5, or food coloring may be added to the aqueous solution to improve the visibility of attachment to the pistil 5.

In addition, as in the present embodiments, it is preferable to enhance the above-mentioned actions and effects of the present disclosure by not adding a surfactant to the pollen activation solution 1, but a surfactant such as sodium polyoxyethylene lauryl ether sulfate may also be added, for example.

In the above Experimental Examples 72, 82, and 92, an aqueous solution of potassium silicate was added to an aqueous solution, but the silicon added to the pollen activation solution 1 is not limited to this, and may be, for example, another silicic acid different from potassium silicate, silicon dioxide such as silicon dioxide nanoparticles, or silicon itself such as covalently bonded crystals of silicon. Also, it is preferable that the silicon added to the pollen activation solution 1 is dissolved in the aqueous solution, but it does not have to be dissolved in the aqueous solution.

In addition, the configuration of the pollen activation solution 1 according to the present embodiments is one example, and can be changed or modified as desired as long as it can solve the problem that the present disclosure is intended to solve.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2023-30776, filed on March 1, 2023, the entire disclosure of which is incorporated by reference herein.

### Reference Signs List

- 1: Pollen activation solution
- 2: Sprayer
- 3: Container
- 4: Plant
- 5: Pistil
- 6: Output port
- 7: Input switch

## Claims

1. A pollen activation solution containing pollen being dispersed therein, which is supplied to a pistil of a plant, comprising:
an aqueous solution containing a substance that activates the pollen germination and pollen tube elongation; and
a powdered carbon constituent that is a substance composed of carbon added to the aqueous solution,
wherein the carbon constituent is not subjected to an activation treatment.

2. The pollen activation solution according to claim 1, wherein a BET specific surface area of the carbon constituent is less than 1.6 × 10³m²/g.

3. The pollen activation solution according to claim 1, wherein an average particle size of the powdered carbon constituent is 3 µm or more and 15 µm or less.

4. The pollen activation solution according to claim 1, wherein the type of the carbon constituent is any one of bamboo leaf charcoal, hemp husk charcoal, oak charcoal, coconut shell charcoal, and bamboo charcoal.

5. The pollen activation solution according to claim 1, further comprising silicon added to the aqueous solution.

6. The pollen activation solution according to claim 5, wherein the silicon is dissolved in an aqueous solution.

7. The pollen activation solution according to claim 1, wherein a temperature at which the pollen germination can be activated is 4°C or higher and 25°C or lower.

8. The pollen activation solution according to any one of claims 1 to 7, wherein an amount of the powdered carbon constituent added is 50 mg or more and 200 mg or less per 10 mL of the aqueous solution.

9. The pollen activation solution according to any one of claims 1 to 7, wherein the amount of the powdered carbon constituent added is 0.05 mg or more and 0.2 mg or less per 1 mg of the substance for activation.
